# FASCICULE DE BREVET EUROPEEN

(11) **EP 1 086 411 B1**
(45) Date de publication et mention de la délivrance du brevet: **12.11.2003**
(21) Numéro de dépôt: 98930841.6
(22) Date de dépôt: 12.06.1998
(51) Int. Cl.: G06F 1/00

(54) **PROCEDE DE CONTROLE DE L'EXECUTION D'UN PRODUIT LOGICIEL**
VERFAHREN ZUR KONTROLLE DER AUSFÜHRUNG EINES PROGRAMMPRODUKTES
METHOD FOR VERIFYING THE EXECUTION OF A SOFTWARE PRODUCT

(43) Date de publication de la demande: 28.03.2001
(73) Titulaire: Gemplus, 13881 Gémenos Cedex (FR)
(72) Inventeur: GREGOIRE, Louis, 13260 Cassis (FR)
(86) Numéro de dépôt international: FR9801226
(87) Numéro de publication internationale: WO99066387

(56) Documents cités:
- EP-A- 0 191 162
- EP-A- 0 268 138
- WO-A-97/04412
- BE-A- 1 009 122
- FR-A- 2 762 417
- FERREIRA R C: "THE SMART CARD: A HIGH SECURITY TOOL IN EDP" PHILIPS TELECOMMUNICATION REVIEW, vol. 47, no. 3, 1 septembre 1989, pages 1-19, XP000072642
- KEUL M: ""DONGLES": HARDWARE SCHUTZT SOFTWARE" ELEKTRONIK, vol. 39, no. 10, 11 mai 1990, pages 82-84, 86, XP000117036

## Description

La présente invention concerne le domaine de la protection de produits logiciels contre le piratage. Elle a pour objet un procédé de contrôle de l'exécution d'un produit logiciel.

On entend par produit logiciel tout programme et/ou données destinés à être traités ou exécutés par une unité centrale notamment d'un micro-ordinateur PC. Ils peuvent être enregistrés sur tout support tel que disquette, disque dur disque optique compact « CD-ROM », ou mémorisés sur tout support tel que mémoire de type « ROM ». « EEPROM ».

Les programmes d'ordinateur ou produits logiciels notamment pour PC sont de plus en plus dupliqués et utilisés sans autorisation. Ceci est accentué par la possibilité de diffuser la copie à grande échelle par des réseaux de serveurs ou de la dupliquer par une production de masse de CD-ROM gravés avec le logiciel. On connaît également la simple copie illicite sur le disque dur ou disquettes de micro-ordinateur qui peut se produire au sein d'une même entreprise.

Parmi les solutions pour éviter l'usage illicite de produits logiciels, on connaît un procédé de contrôle de la distribution du programme d'ordinateur. Le programme est enregistre sur son support sous forme chiffrée et il est ensuite déchiffré avant chargement sur l'ordinateur par l'utilisateur autorisé. L'utilisateur autorisé dispose à cet effet de moyens permettant le déchiffrement. Ce procédé a l'avantage d'éviter la duplication du support contenant le programme chiffré mais à l'inconvénient de ne pas éviter la copie du programme à partir du PC.

On connaît également un procédé de contrôle de l'exécution du programme. Il consiste à mettre en oeuvre une procédure permettant de vérifier la présence d'un dispositif sécurisé branché notamment sur le connecteur du PC destiné aux communications série, ou à une imprimante, ce dispositif attestant de par sa présence que l'utilisateur est autorisé à utiliser le programme. Lors de l'exécution du programme, on vérifie la présence et l'authenticité du dispositif sécurisé, la vérification conditionnant la poursuite de l'exécution du programme. Ce procédé a l'inconvénient de pouvoir être contourné en sautant les instructions correspondant à cette vérification.

On connaît également un procédé de contrôle de l'usage d'un micro-ordinateur et donc indirectement de tout programme contenu à l'intérieur, par une personne autorisée. Il met en oeuvre une carte à puce telle qu'une carte à micro-circuit, appélée communément « smart-card » Dans ce procédé, un micro-ordinateur PC est relié a l'aide d'une interface adaptée à la « smart-card » qui contient un code secret d'authentification. L'usager autorisé doit introduire au clavier le code d'accès qui est comparé à celui stocké dans la « smart-card ». En cas d'adéquation, l'accès à l'ordinateur ou à des informations ou à un programme de l'ordinateur est autorisé.

Ce procédé a l'inconvénient de ne pas protéger directement le support avant le chargement du programme dans l'ordinateur. On peut donc dupliquer le support.

Dans la description qui va suivre on entend par smart-card tout support à puce de type accessoire, détachable et portable comprenant au moins un module de sécurité contenant un microprocesseur et un espace mémoire apte à contenir une donnée secrète telle qu'une clé secrète ainsi que des programmes secrets. En particulier. Il s'agit d'un module enfichable à un port d'entrée/sortie d'ordinateur. De préférence il s'agit d'une carte au format normalisé d'une carte à puce ou d'une mini-carte à puce,

L'objectif de la présente invention est de proposer une solution au problème de piratage qui soit plus efficace que les solutions actuelles.

La solution apportée par l'invention se situe également au niveau au contrôle de l'exécution d'un programme d'ordinateur L exécution est contrôlée du fait qu'elle est uniquement permise aux personnes qui ont acquis un droit d'utilisation. Ce droit est matérialisé par un moyen ou accessoire sécurisé notamment une « smart-card » selon un exemple de l'invention. Par ce biais on dissuade d'effectuer toute duplication ou toute diffusion du programme.

A cet effet, l'invention a d'abord pour objet un procédé de contrôle de l'exécution d'un programme d'ordinateur. Selon un premier mode, il comporte les étapes suivantes consistant à :
1) Scinder un programme en au moins deux parties, respectivement publique et secrète, la partie publique étant apte à être exécutée sur un premier moyen de traitement, la partie secrète étant apte à être exécutée sur un deuxième moyen de traitement sécurisé.
2) disposer ladite partie publique dans une mémoire du premier moyen de traitement.
3) disposer la partie secrète sur un support sécurisé du deuxième moyen de traitement destiné à être connecté au premier moyen de traitement.
4) effectuer les opérations suivantes pour l'exécution du programme par le premier moyen de traitement :
   a) connexion du deuxième moyen de traitement au premier et transmission du premier moyen de traitement au deuxième de paramètres/variables fonctions de signaux externes déclenchés par un utilisateur,
   b) exécution d'au moins une partie du programme par le deuxième moyen de traitement en mettant en oeuvre un certain nombre desdits paramètres/variables reçus,
   c) transmission du deuxième moyen de traitement au premier, des résultats de l'exécution de l'alinéa précédent b).
   d) exploitation d'un certain nombre desdits résultats dans l'exécution réalisée par le premier moyen.

Il est caractérisé en ce que le deuxième moyen est un support accessoire à puce portable et détachable.

Selon un autre mode de réalisation, le procédé comporte les étapes suivantes consistant à
1') Scinder un programme en au moins deux parties, respectivement publique et secrète, la partie publique étant apte à être exécutée sur un premier moyen de traitement, la partie secrète étant apte à être exécutée sur un deuxième moyen de traitement sécurisé
2') chiffrer au moins une partie secrète et la disposer avec la partie publique sur un même support, celui-ci étant destiné à être connecté au premier moyen de traitement,
3') disposer dans le deuxième moyen de traitement une fonction de déchiffrement correspondante.
4') effectuer les opérations suivantes pour l'exécution du programme:
   a') connexion du deuxième moyen de traitement au premier et transmission du premier moyen de traitement vers le deuxième de tout ou partie de la partie secrète chiffrée,
   b') déchiffrement de ladite partie secrète chiffrée reçue par le deuxième moyen de traitement sécurisé en mettant en oeuvre ladite fonction de déchiffrement et conservation en mémoire sécurisée de la partie secrète en clair,
   c') transmission du premier moyen de traitement au deuxième de paramètres/variables fonctions de signaux externes,
   d') exécution d'au moins une partie secrète par le deuxième moyen de traitement sécurisé en exploitant un certain nombre desdits paramètres/variables recues.
   e') transmission du deuxième moyen de traitement au premier des résultats de l'exécution de l'alinéa précédent d'):
   f') exploitation d'un certain nombre desdits résultats dans l'exécution réalisée par le premier moyen

Il est caractérisé en ce que le deuxième moyen est un support accessoire à puce portable et détachable.

Selon une caractéristique de mise en oeuvre de la seconde variante, à l'opération a'), on transmet une partie du programme chiffré au fur et à mesure des besoins et/ou en fonction de la capacité du deuxième moyen de traitement sécurisé.

Grâce à cette caractéristique, on peut exécuter un programme chiffré de dimension supérieure à la capacité mémoire du deuxième moyen de traitement. Cela rend possible, le recours à des supports portables discrets, manipulables de type à puce qui généralement sont exclus en tant que deuxième moyen de traitement de par leur faible capacité.

L'invention sera mieux comprise à la lecture de la description des deux modes de mise en oeuvre du procédé sur un exemple de programme d'ordinateur.

Le programme retenu pour l'exemple est un programme de traitement de texte.

Pour la mise en oeuvre du procède, il est nécessaire de sonder le programme de traitement de texte en au moins deux parties respectivement publique et secrète. La partie publique est apte à être exécutée sur un premier moyen de traitement tandis que la partie secrète est apte à être exécutée sur un deuxième moyen de traitement sécurisé. Elles peuvent donc être amenées à subir une compilation appropriée distincte pour l'une et l'autre.

La première partie est dite publique et exécutable sur un système d'exploitation de micro-ordinateur (PC) pris dans l'exemple comme premier moyen de traitement.

La deuxième partie dite secrète est quant à elle exécutable sur un circuit sécurisé de carte à puce pris dans l'exemple comme un deuxième moyen de traitement. Le circuit sécurisé comporte un processeur 8 bits, une mémoire permanente ROM contenant le système d'exploitation de la carte, et une mémoire non volatile de type EEPROM et une memoire volatile de travail de type RAM. Le circuit peut par exemple être le circuit d'une « smart-card ».

Lors du stockage du programme de traitement de texte sur un support destiné à être distribué commercialement, celui-ci est réparti sur des supports de mémorisation ou d'enregistrement distincts. Pour cela, dans exemple, on dispose la partie publique sur un disque optique (CD-ROM) tandis que la partie secrète est disposée dans la mémoire EEPROM de la cane à puce. Le programme nécessite donc dans ce cas comme support physique pour le matérialiser deux éléments: le disque optique et une carte à puce associée. Dans l'exemple, on a choisi la fonction de calcul de la position du curseur sur l'écran d'un PC pour constituer la partie secrète, Cette fonction manquante dans le disque optique se trouve donc uniquement dans la carte à puce

Pour l'exécution du programme, le PC est connecté à la carte à puce par une interface de manière à permettre une communication bi-directionnelle entre eux. Le programme public du disque optique est chargé dans le PC par lecture du disque optique. La carte à puce peut être par exemple connectée au PC par l'intermédiaire d'un lecteur de carte à puce lui même relié à un port d'entrée/sortie du PC.

Au cours de l'exécution selon l'invention on effectue les opérations ou étapes ci-après.

On transmet du premier moyen de traitement au deuxième des paramètres/variables fonction de signaux externes

D'une manière générale, on entend par signaux externes des informations ou des événements qui sont susceptibles d'être différents à chaque utilisation du programme. La sécurité du système est d'autant mieux assurée que l'ensemble des informations communiquées à la carte diffère à chaque utilisation. Elle est également d'autant mieux assurée que le programme dans la carte à puce est complexe parce qu 'il comporte, par exemple, énormément de sorties possibles et que la relation entre les entrées et les sorties est sophistiquée.

Au sens de la présente invention, peuvent par exemple constituer des signaux externes, les actions déclenchées par l'utilisateur via une souris ou un clavier ou autre périphérique d'entrée.

Dans l'exemple, c'est l'unité centrale du PC qui transmet, via l'interface, à la carte les données qui correspondent aux touches du clavier actionnées par l'utilisateur L'unité centrale effectue cette transmission en exécutant le programme public et les fonctions du système d'exploitation. A cet effet le programme public comporte les instructions nécessaires à cette transmission.

Selon une étape suivante du procédé, on exécute au moins une partie du programme par le deuxième moyen de traitement sécurisé en exploitant un certain nombre desdits paramètres/variables reçues. Cela implique que la sortie de l'exécution de cette partie du programme va dépendre fortement de la valeur ou nature des paramètres/variables exploitées ou pris en compte par le deuxième moyen de traitement pour l'exécution du programme secret.

Dans l'exemple, lorsque l'utilisateur frappe les touches du clavier, la carte exécute donc le calcul de la position du curseur dans une ligne de texte sur l'écran et renvoie le résultat au PC, en l'occurrence la valeur de cette position, conformément à une autre étape du procédé.

Ensuite, selon le procédé on peut utiliser les résultats ci-dessus tel quels ou de préférence prendre en compte ou exploiter un certain nombre desdits résultats ci-dessus dans l'exécution réalisée par le premier moyen. Dans l'exemple, l'unité centrale du PC exécute la partie publique du programme pour afficher sur l'écran la position du curseur.

On constate que l'utilisateur ne peut utiliser la fonction curseur du traitement de texte en l'absence de la carte. Par ce biais, on dissuade toute copie illicite du logiciel du traitement de texte puisqu'il est inutilisable sans la carte. On comprend que grâce à l'invention, la dissuasion ci-dessus soit d'autant plus efficace que la partie secrète correspond à une partie essentielle du programme.

On va décrire maintenant un autre mode de mise en oeuvre du procédé de l'invention.

Le système nécessaire à la mise en oeuvre du procédé est identique à celui décrit précédemment avec les différences ci-après.

La partie secrète est disposée sous forme chiffrée sur le disque optique avec la partie publique au lieu d'être disposée dans la carte à puce.

La mémoire ROM de la carte contient en plus du système d'exploitation une fonction de déchiffrement et de chargement du programme déchiffré dans sa mémoire RAM.

Au cours de l'exécution du programme selon l'invention, on effectue les opérations ou étapes ci-après.

On transmet du premier moyen de traitement au deuxième tout ou partie du programme chiffré.

Dans l'exemple, c'est la fonction de calcul de la position du curseur qui est chiffrée. Celle-ci est transmise chiffrée par le programme de traitement de texte à la carte à puce par exemple au démarrage du programme. Elle peut également être transmise seulement à l'instant où elle devient nécessaire. A cet effet, le programme de traitement de texte inclut également des informations permettant de la localiser notamment son adresse ou son nom de fichier.

Selon le procédé, on déchiffre ladite partie secrète chiffrée reçue par le deuxième moyen de traitement sécurisé en mettant en oeuvre ladite fonction de déchiffrement et on conserve en mémoire sécurisée la partie secrète en clair.

Dans l'exemple, la carte à puce déchiffre la fonction de calcul de la position du curseur en mettant en oeuvre sa fonction de déchiffrement et mémorise sous forme exécutable la fonction en question.

On constate dans cet exemple que le procédé met en oeuvre un système comportant une smart-card, celle ci étant apte à charger tout ou partie du programme chiffré, à déchiffrer avec une clé secrète de l'éditeur du logiciel, à recevoir des appels des premier moyens et à les transmettre pour le programme exécutable qui a été préalablement chargé, à retourner les résultats au premier moyen de traitement.

Le programme exécutable public comporte des instructions supplémentaires pour transmettre des parties de programme secret à la carte, via des fonctions entrée/sortie du système d'exploitation de la carte ou éventuellement via celles du système d'exploitation du PC, et des instructions pour des appels à des fonctions chargées dans la carte.

Par extension des applications possibles du procédé de l'invention, le déchiffreur du deuxième moyen traitement peut être sous forme câblée dans une carte à mémoire ceci afin de diminuer le coût de l'accessoire.

Quant au premier moyen de traitement, il est généralement une unité centrale d'un ordinateur personnel.

Avantageusement, préalablement au chargement de la partie publique sur le premier moyen de traitement tel un PC, celle-ci peut être disponible sur un centre serveur ou une base de données auquel l'unité centrale du premier moyen peut être relié. La partie publique d'un programme ou logiciel peut être également disponible sur un réseau notamment de type internat auquel le premier moyen de traitement peut être relié au souhait de l'utilisateur.

Ainsi, pour un acquéreur potentiel d'un logiciel, il suffit de rechercher le logiciel disponible sur le réseau tel internet et de le charger dans la mémoire de son PC. Parallèlement, l'acquéreur peut recevoir la carte contenant la partie secrète notamment par courrier.

Bien que le logiciel soit disponible par tout le monde sur le réseau internet, il n'est utilisable que si l'utilisateur dispose de l'accessoire matérialisé notamment par une carte à microprocesseur.

Ainsi, par ce biais, l'invention permet à l'éditeur de logiciel de s'affranchir de la duplication de ces derniers sur un support physique tel qu'une disquette. L'invention le dispense également de la distribution physique du logiciel.

En accompagnement des logiciels exécutables mis sur internet, il est possible de joindre des données telles que le contenu d'un manuel d'utilisation d'un logiciel.

### Procédé de distribution des droits:

L'invention décrite ci-dessus permet de séparer la distribution du logiciel lui-même, de la distribution des droits d'utilisation. Le logiciel peut être dupliqué librement par les utilisateurs et/ou mis à disposition sur un serveur local ou distant, sans restriction d'accès. Ceci est vrai pour la partie publique ainsi que pour la partie secrète dans le cas ou elle a été chiffrée, comme décrit dans la deuxième variante. En revanche la distribution des droits doit être sécurisée. pour assurer que l'usage du logiciel n'est accordé qu'après paiement.

Dans la première variante décrite ci-dessus, les droits sont matérialisés sous forme de la partie secrète du programme stockée dans la carte. En effet, seuls ceux qui possèdent une carte avec ce programme secret peuvent utiliser le logiciel. Dans la deuxième variante, les droits sont matérialisés par une clé cryptographique secrète qui permet au deuxième moyen de traitement (module de sécurité) de déchiffrer le code secret qui y est transmis.

Dans les deux variantes décrites, les droits (programme secret ou clé secrète) sont chargés dans le module de sécurité avant la distribution de celui-ci. Il est également possible de distribuer ces éléments à une carte déjà distribuée, par des moyens tels qu'un réseau public (tel qu'Internet) ou le PC avec la carte de l'utilisateur est raccordé, ou par insertion de la carte sur un équipement de point de vente chez un détaillant de logiciel par exemple. Un troisième moyen consiste à établir une communication entre un serveur de distribution de droits distant, et le PC utilisateur, via le réseau téléphonique, grâce à un modem.

La distribution des droits à distance permet de télécharger des nouveaux droits dans une carte qui en contient déjà, par exemple pour un nouveau logiciel, dont le programme public est par ailleurs accessible librement, soit par un réseau, soit depuis la copie d'un ami, soit par exemple parce que le CD-ROM (disque optique compact) initial contient plusieurs logiciels, alors que l'utilisateur n'a acquis les droits que pour l'un d'eux. Elle permet aussi de séparer la distribution des cartes de la distribution des droits, ce qui permet par exemple à plusieurs éditeurs de logiciels d'utiliser la protection assurée par une même carte. La carte devenue neutre, peut dans ce cas, être acquise par l'utilisateur final chez le commerçant des micro-ordinateurs.

Pour réaliser cette distribution de la clé ou du programme secret de manière sécurisée, une première variante du procédé est décrite ci-dessous. On suppose que la carte au départ, ne contient aucun droit:
1) l'émetteur de la carte y inclut, avant distribution, et en plus des éléments décrits ci-dessus dans les deux variantes de l'invention, un moyen de déchiffrement et une clé secrète, destinés à déchiffrer les droits (qui dans un cas sont eux-mêmes représentés par une clé). De plus, il y inclut un nombre unique (différent pour chaque carte) que l'on nomme "identité" de la carte.
2) l'émetteur de la carte met à disposition du ou des éditeurs de logiciel, un moyen de chiffrement des droits et sa clé de chiffrement pour les programmes particuliers de ce ou ces éditeurs. La clé de chiffrement est ici identique à la clé de déchiffrement contenue dans la carte d'utilisateur.
3) lors de l'acquisition des droits, l'acheteur met en communication sa carte avec le serveur de distribution des droits, lui-même relié au moyen de chiffrement des droits. Ceci peut être réalisé par exemple depuis le domicile de l'utilisateur, le bureau, ou dans un point de vente du logiciel, via tout moyen de communications de données tel que le réseau Internet, une liaison par modem, ou l'utilisation des moyens de communication des réseaux de téléphone mobiles équipés d'un lecteur de carte.
4) après vérification du paiement par quelque moyen non décrit ici mais qui peut mettre en jeu une transaction manuelle avec de la monnaie réelle ou un chèque chez le commerçant, ou une transaction automatique avec le même ou un autre serveur distant, et mettant en jeu des fonctions de paiement spécifiques du système d'exploitation de la même ou d'une autre carte, la carte envoie une demande de chargement des droits au serveur. Cette demande comprend une identification du produit logiciel demandé, ainsi que l'identité de la carte.
5) le serveur combine l'identité de la carte avec la clé de chiffrement des droits, par exemple par une opération logique XOR, le résultat étant d'un nombre de bit adéquat pour être utilisé comme clé de chiffrement. Ce procédé s'appelle diversification de la clé. Le serveur utilise cette clé diversifiée pour chiffrer les droits demandés. Il permet de garantir que les droits ainsi chiffrés ne seront utilisables que par la carte qui les a demandés, et ne pourront, en particulier pas être chargés dans d'autres cartes.
6) le serveur envoie les droits ainsi chiffrés à la carte de l'acheteur.
7) la carte de l'acheteur effectue la même opération combinant clé de chiffrement et identité pour calcuier la clé de déchiffrement. Elle l'utilise pour déchiffrer les droits et les stocke dans sa mémoire non volatile. Elle a alors les moyens d"exécuter la partie secrète du programme qui a été acquis

## Revendications

1. Procédé de contrôle de l'exécution d'un programme d'ordinateur comportant les étapes suivantes consistant à:
1) Scinder un programme en au moins deux parties respectivement publique et secrète, la partie publique étant apte à être exécutée sur un premier moyen de traitement, la partie secrète étant apte à être exécutée sur un deuxième moyen de traitement sécurisé.
2) disposer ladite partie publique dans une mémoire du premier moyen de traitement.
3) disposer la partie secrète sur un support sécurisé du deuxième moyen de traitement destiné à être connecté au premier moyen de traitement.
4) effectuer les opérations suivantes pour l'exécution du programme par le premier moyen de traitement :
a) connexion du deuxième moyen de traitement au premier et transmission du premier moyen de traitement au deuxième de paramètres/variables fonctions de signaux externes déclenchés par un utilisateur.
b) exécution d'au moins une partie du programme par le deuxième moyen de traitement en mettant en oeuvre un certain nombre desdits paramètres/variables reçus.
c) transmission du deuxième moyen de traitement au premier, des résultats de l'exécution de l'alinéa précédent b),
d) exploitation d'un certain nombre desdits résultats dans l'exécution réalisée par le premier moyen.
**caractérisé en ce que** le deuxième moyen est un support accessoire à puce portable et détachable.

2. Procédé de contrôle de l'exécution d'un programme d'ordinateur comportant les étapes suivantes consistant à:
1') Scinder un programme en au moins deux parties, respectivement publique et secrète, la partie publique étant apte à être exécutée sur un premier moyen de traitement, la partie secrète étant apte à être exécutée sur un deuxième moyen de traitement sécurisé
2') chiffrer au moins une partie secrète et la disposer avec la partie publique sur un même support, celui-ci étant destiné à être connecté au premier moyen de traitement,
3') disposer dans le deuxième moyen de traitement une fonction de déchiffrement correspondante.
4') effectuer les opérations suivantes pour l'exécution du programme:
a') connexion du deuxième moyen de traitement au premier et transmission du premier moyen de traitement vers le deuxième de tout ou partie de la partie secrète chiffrée,
b') déchiffrement de ladite partie secrète chiffrée reçue par le deuxième moyen de traitement sécurisé en mettant en oeuvre ladite fonction de déchiffrement et conservation en mémoire sécurisée de la partie secrète en clair,
c') transmission du premier moyen de traitement au deuxième de paramétres/variables fonctions de signaux externes.
d') exécution d'au moins une partie secrète par le deuxième moyen de traitement sécurisé en exploitant un certain nombre desdits paramètres/variables reçues,
e') transmission du deuxième moyen de traitement au premier des résultats de l'exécution de l'alinéa précédent d');
f') exploitation d'un certain nombre desdits résultats dans l'exécution réalisée par le premier moyen,
**caractérisé en ce que** le deuxième moyen est un support accessoire à puce portable et détachable.

3. Procédé selon la revendication 2, **caractérisé en ce que** l'on transmet à l'opération a') une partie du programme chiffré au fur et à mesure des besoins et/ou en fonction de la capacité du deuxième moyen de traitement sécurisé.

4. Procédé selon l'une des revendications 1 à 3. **caractérisé en ce que** le deuxième moyen de traitement est une carte à micro-processeur.

5. Procédé selon l'une des revendications 1 à 3, **caractérisé en ce que** le deuxième moyen de traitement est sous forme cablée dans une carte à mémoire.

6. Procédé selon l'une quelconque des revendications précédentes, **caractérisé en ce que** le premier moyen de traitement est une unité centrale d'un ordinateur.

7. Procédé selon l'une quelconque des revendications précédentes **caractérisé en ce que** l'unité centrale est reliée à un réseau notamment de type internet, sur lequel au moins la partie publique du programme est disponible à la demande.

8. Procédé selon les revendications 2 à 7, **caractérisé en ce que** l'on effectue une distribution sécurisée de droits d'utilisation dudit programme à un support d'un utilisateur par l'intermédiaire d'un serveur.

9. Procédé selon la revendication 8, **caractérisé en ce que** le support envoie une demande de chargement des droits au serveur comprenant l'identité du programme et une identité du support, ledit serveur combine une identité du support du demandeur avec une clé de chiffrement des droits, le résultat étant d'un nombre de bit adéquat pour être utilisé comme clé de chiffrement diversifiée, le serveur utilise cette clé diversifiée pour chiffrer les droits demandés et envoie les droits ainsi chiffrés au support du demandeur.

## Patentansprüche

1. Kontrollverfahren zur Ausführung eines Computerprogramms mit den folgenden Stufen, bestehend aus:
1) Spalten eines Programms in wenigstens zwei Teile, ein öffentliches und ein geheimes, wobei der öffentliche Teil geeignet ist, auf einem ersten Behandlungsmittel ausgeführt zu werden, wobei der geheime Teil geeignet ist, auf einem zweiten, gesicherten Behandlungsmittel ausgeführt zu werden
2) Anordnen des besagten öffentlichen Teils in einem Speicher des ersten Behandlungsmittels
3) Anordnen des geheimen Teils auf einem gesicherten Träger des zweiten, zum Anschluss an das erste Behandlungsmittel bestimmten Behandlungsmittels
4) Durchführen der folgenden Operationen zur Ausführung des Programms durch das erste Behandlungsmittel:
a) Anschließen des zweiten Behandlungsmittels an das erste und Übertragen von Parametern / variablen Funktionen von externen, durch einen Anwender ausgelösten Signalen vom ersten Behandlungsmittel auf das zweite
b) Ausführen wenigstens eines Teils des Programms durch das zweite Behandlungsmittel durch Umsetzen einer bestimmten Anzahl der besagten empfangenen Parameter /Variablen
c) Übertragen der Ergebnisse der Ausführung des vorherigen Absatzes b) vom zweiten Behandlungsmittel auf das erste
d) Verarbeiten einer bestimmten Anzahl der besagten Ergebnisse in der vom ersten Mittel realisierten Ausführung
**dadurch gekennzeichnet, dass** das zweite Mittel ein zusätzlicher Träger mit tragbarem und abnehmbarem Chip ist.

2. Kontrollverfahren zur Ausführung eines Computerprogramms mit den folgenden Stufen, bestehend aus:
1') Spalten eines Programms in wenigstens zwei Teile, ein öffentliches und ein geheimes, wobei der öffentliche Teil geeignet ist, auf einem ersten Behandlungsmittel ausgeführt zu werden, wobei der geheime Teil geeignet ist, auf einem zweiten, gesicherten Behandlungsmittel ausgeführt zu werden
2') Chiffrieren wenigstens eines geheimen Teils und Anordnen mit dem öffentlichen Teil auf ein und demselben Träger, wobei dieser zum Anschluss an das erste Behandlungsmittel bestimmt ist
3') Anordnen einer entsprechenden Dechiffrierungsfunktion im zweiten Behandlungsmittel
4') Durchführen der folgenden Operationen zum Ausführen des Programms
a') Anschließen des zweiten Behandlungsmittels an das erste and Übertragen des vollständigen oder teilweisen Teils des geheimen chiffrierten Teils vom ersten Behandlungsmittel auf das zweite
b') Dechiffrieren des besagten, vom zweiten, gesicherten Behandlungsmittel empfangenen chiffrierten geheimen Teils durch Umsetzen der besagten Dechiffrierungsfunktion und Aufbewahren des geheimen Teils im gesicherten Speicher in klarer Form
c') Übertragen von Parametern / variablen, externen Signalfunktionen vom ersten Behandlungsmittel auf das zweite
d') Ausführen wenigstens eines geheimen Teils durch das zweite, gesicherte Behandlungsmittel durch Nutzen einer bestimmten Anzahl der besagten empfangenen Parameter / Variablen
e') Übertragen der Ausführungsergebnisse des vorherigen Absatzes d') vom zweiten Behandlungsmittel auf das erste
f') Verarbeiten einer bestimmten Anzahl der besagten Ergebnisse in der vom ersten Mittel realisierten Ausführung
**dadurch gekennzeichnet, dass** das zweite Mittel ein zusätzlicher Träger mit tragbarem und abnehmbarem Chip ist.

3. Verfahren gemäß Anspruch 2, **dadurch gekennzeichnet, dass** man je nach Bedarf und / oder in Abhängigkeit von der Fähigkeit des zweiten, gesicherten Behandlungsmittels einen Teil des chiffrierten Programms auf die Operation a') überträgt.

4. Verfahren gemäß Anspruch 1 bis 3, **dadurch gekennzeichnet, dass** das zweite Behandlungsmittel eine Karte mit Mikroprozessor ist.

5. Verfahren gemäß Anspruch 1 bis 3, **dadurch gekennzeichnet, dass** das zweite Behandlungsmittel in verkabelter Form in einer Speicherkarte ist.

6. Verfahren gemäß einem der vorherigen Ansprüche, **dadurch gekennzeichnet, dass** das erste Behandlungsmittel eine Zentraleinheit eines Computers ist.

7. Verfahren gemäß einem der vorherigen Ansprüche, **dadurch gekennzeichnet, dass** die Zentraleinheit mit einem Netz verbunden ist, insbesondere vom Typ Internet, auf dem wenigstens der öffentliche Teil des Programms auf Verlangen verfügbar ist.

8. Verfahren gemäßAnspruch 2 bis 7, **dadurch gekennzeichnet, dass** man eine gesicherte Verteilung von Nutzungsrechten des besagten Programms auf einen Träger eines Nutzers mittels eines Servers durchführt.

9. Verfahren gemäß Anspruch 8, **dadurch gekennzeichnet, dass** der Träger an den Server eine Ladeanforderung der Rechte mit der Identität des Programms und einer Identität des Trägers verschickt, wobei der besagte Server eine Identität des Trägers des Anforderers mit einem Chiffrierungsschlüssel der Rechte kombiniert, wobei das Ergebnis eine zur Nutzung als diversifizierter Chiffrierungsschlüssel entsprechende Bitzahl ist, der Server diesen diversifizierten Schlüssel zum Chiffrieren der angeforderten Rechte nutzt und die so chiffrierten Rechte an den Träger des Anforderers schickt.

## Claims

1. A method for controlling the execution of a computer program comprising the following steps consisting in:
1) dividing a program into at least two parts, respectively public and secret, the public part being able to be executed on a first processing means, the secret part being able to be executed on a second secure processing means,
2) disposing the said public part in a memory of the first processing means,
3) disposing the secret part on a secure medium of the second processing means intended to be connected to the first processing means,
4) performing the following operations for the execution of the program by the first processing means:
a) connection of the second processing means to the first and transmitting, from the first processing means to the second, parameters/variables which are functions of external signals triggered by a user,
b) execution of at least part of the program by the second processing means using a certain number of the said parameters/variables received,
c) transmission, from the second processing means to the first, of the results of the execution of the previous paragraph (b),
d) use of a certain number of the said results in the execution performed by the first means,
**characterised in that** the second means is an accessory medium with a detachable portable chip.

2. A method for controlling the execution of a computer program comprising the following steps consisting in:
1') dividing a program into at least two parts, respectively public and secret, the public part being able to be executed on a first processing means, the secret part being able to be executed on a second secure processing means,
2') enciphering at least one secret part and disposing it with the public part on the same medium, the latter being intended to be connected to the first processing means,
3') disposing in the second processing means a corresponding deciphering function,
4') performing the following operations for executing the program:
a') connection of the second processing means to the first and transmission from the first processing means to the second of all or part of the enciphered secret part,
b') deciphering of the said enciphered secret part received by the second secure processing means by implementing the said deciphering function and keeping the said secret part in secure memory in clear,
c') transmission from the first processing means to the second of parameters/variables which are functions of external signals,
d') execution of at least one secret part by the second secure processing means using a certain number of the said parameters/variables received,
e') transmission from the second processing means to the first of the results of the execution of the previous paragraph d'),
f') use of a certain number of the said results in the execution performed by the first means,
**characterised in that** the second means is an accessory medium with a detachable portable chip.

3. A method according to Claim 2, **characterised in that**, at operation a'), part of the enciphered program is transmitted gradually as required and/or as a function of the capacity of the second secure processing means.

4. A method according to one of Claims 1 to 3, **characterised in that** the second processing means is a microprocessor card.

5. A method according to one of Claims 1 to 3, **characterised in that** the second processing means is in hard-wired form in a memory card.

6. A method according to any one of the preceding claims, **characterised in that** the first processing means is a central unit of a computer.

7. A method according to any one of the preceding claims, **characterised in that** the central unit is connected to a network, in particular of the Internet type, on which at least the public part of the program is available on request.

8. A method according to Claims 2 to 7, **characterised in that** a secure distribution of rights to use the said program is made to a medium of a user by means of a server.

9. A method according to Claim 8, **characterised in that** the medium sends a request for loading the rights to the server comprising the identity of the program and an identity of the medium, the said server combines an identity of the medium of the requester with a key for enciphering the rights, the result being a bit number suitable for being used as a diversified enciphering key, the server uses this diversified key for enciphering the rights requested and sends the rights thus enciphered to the medium of the requester.
